# EUROPEAN PATENT APPLICATION

(11) **EP 1 008 840 A1**
(43) Date of publication of application: **14.06.2000**
(21) Application number: 99204180.6
(22) Date of filing: 10.12.1999
(51) Int. Cl.: G01L 9/00

(54) **Optical pressure sensor and measuring device provided with such a pressure sensor**

(30) Priority: 11.12.1998 BE 9800892
(71) Applicant: Glotzl Europe Sensors N.V., 2440 Ceel (BE); CEA Etablissement public à caractère industriel et commercial, 75752 Paris Cedex 15 (FR)
(72) Inventor: Voet, Marc Rosa Henri, 76337 Waldbronn (DE); Bugaud, Michel, 92500 Rueil Malmaison (FR); Ferdinand, Pierre, 78800 Houille (FR)
(74) Representative: Debrabandere, René

(57) **Abstract**

Optical pressure sensor with a chamber containing a housing (1) and a membrane (3) provided therein, characterised in that it contains an optical fibre with what is called a 'Bragg grating' (5), i.e. a fibre part in whose core are formed reflecting surfaces, which optical fibre (4) is fixed in such a manner between the membrane (3) and the housing (1) that its length will change as the membrane (3) is deformed.

## Description

The present invention concerns an optical pressure sensor containing a housing and a membrane provided therein.

Such an optical pressure sensor is described in BE-A-1.004.056.

Two closed pressure chambers are separated from one another by means of a membrane in which has been worked a small mirror element. A glass fibre opens opposite to the mirroring surface of the mirror element in one of the chambers. As a result of a change of pressure in one of the chambers, the membrane will deform and thus move the mirror element, so that the reflected light is modulated.

The pressure sensor also contains a reference sensor element consisting of a long, curled-up glass fibre.

Both glass fibres are connected to a fibre network by means of a coupler and are thus connected to a control unit.

A light signal which is sent via the network is reflected both by the reference sensor element and the mirror element, and the control unit will determine what pressure is exerted on the membrane based on the difference in retardation of the reflected light signal.

As this pressure sensor contains a reference sensor element, it is relatively expensive and sizeable. Moreover, it has to be connected to a coupler, so that a measuring device equipped with one or several of such sensors is relatively expensive.

The invention aims an optical pressure sensor which avoids this disadvantage and which is relatively simple and inexpensive and which can be easily implemented in a measuring device.

This aim is reached according to the invention in that the pressure sensor contains an optical fibre with what is called a 'Bragg grating', i.e. a fibre part in whose core are formed reflecting surfaces, which optical fibre is fixed in such a manner between the membrane and the housing that its length will change as the membrane is deformed.

Such optical fibres with a 'Bragg grating' are obtained by locally doping their cores with specific metal ions and subsequently irradiating them with a multidimensional UV-pattern, so that reflecting surfaces are formed in the core. Every pattern coincides with a certain wavelength band whereby part of the light is spectrally reflected on these surfaces and part of the light is transmitted (transmissive light). With a spectrum analysis instrument, this spectral displacement can be easily measured in both directions, and said optical fibre can in principle be interrogated on both ends.

This principle is already applied for measuring deformations resulting from forces, whereby a glass fibre is worked with a Bragg grating in a strain gauge. In fact, the Bragg grating is an optical strain gauge.

In the pressure sensor according to the invention, the specific spectrum pattern of the Bragg grating changes as a function of the pressure.

This optical fibre with a Bragg grating extends past its attachment to the housing, outside this housing, and may possibly be connected to a conventional optical fibre.

This optical fibre is connected to a light source and to a spectral examination unit.

Depending on the direction of deflection of the membrane in relation to the fibre with the Bragg grating, this fibre must be either or not prestressed for the deflection to cause a change in the fibre's length.

The housing can be connected to a pressure chamber which opens on the outside of the housing into the membrane, in which case the optical fibre with the Bragg grating in the housing, at an equal pressure in the pressure chamber and in the housing, is prestressed.

However, the housing may also be closed pressure-tight and form a pressure chamber, in which case the optical fibre with the Bragg grating is either or not prestressed.

According to a particular embodiment, the optical fibre with a Bragg grating contains a second Bragg grating with another spectral reflection pattern for measuring the temperature, or it is coupled in series to a second optical fibre with a Bragg grating having another spectral reflection pattern for measuring the temperature.

The invention also concerns a pressure measuring device provided with a pressure sensor according to any of the preceding embodiments, whereby the device contains a light source and a spectral examination unit, which are both connected to the optical fibre of the pressure sensor by means of optical fibres.

In order to better explain the characteristics of the invention, the following preferred embodiment of a pressure sensor according to the invention and of a pressure measuring device provided with such a pressure sensor, is described as an example only without being limitative in any way, with reference to the accompanying drawings, in which:
figure 1 schematically represents a pressure measuring device which is provided with a pressure sensor according to the invention;
figures 2 and 3 schematically represent pressure sensors analogous to that in figure 1, but with reference to other embodiments of the invention.

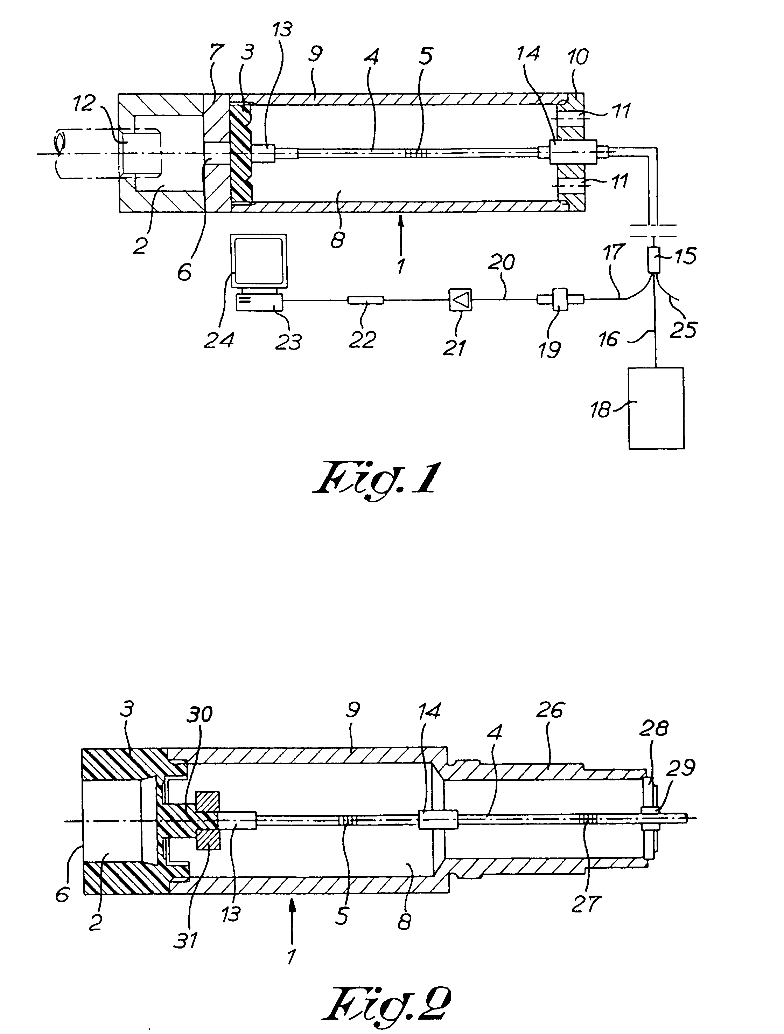

The pressure sensor represented in figure 1 mainly consists of a longitudinal housing 1 of which one end is connected to a pressure chamber 2, whereby a deformable membrane 3 is provided at this end in the housing 1, and an optical glass fibre 4 is stretched between this membrane 3 and the opposite end of the housing 1.

The glass fibre 4 with a length of for example five to ten cm contains what is called a Bragg grating 5 inside the housing 1, i.e. a small piece having a length of for example some five mm, there where its core contains small mirroring surfaces which are obtained thanks to doping with specific UV-sensitive ions, followed by radiation with UV-light according to a specific pattern.

The membrane 3 is disc-shaped and is for example made of rubber, and it is situated opposite to an opening 6 which is provided in a wall 7 forming the partition between the pressure chamber 2 and the space 8 inside the housing 1.

The membrane 3 is fixed to the wall 7 such that it can be replaced, for example by means of screws, or directly to the housing 1 as it is provided with screw thread on its perimeter and is screwed in the tubular jacket 9 of the housing 1.

The end of the housing 1 situated opposite to the membrane 3 consists of a removable lid 10 with openings 11 which is screwed on the above-mentioned tubular jacket 9.

The pressure chamber 2 is provided with an entry 12 opposite to the opening 6 in which can be screwed a tube or pipe which, save for the opening 6 and the entry 12, connects this entirely pressure-tight closed pressure chamber 2 to the space in which prevails the pressure to be measured, so that this pressure to be measured also prevails in the pressure chamber 2.

The glass fibre 4 is fixed to the membrane 3 by means of a small metal bush 13 which is fixed, for example glued, to the membrane 3 and in which is fixed one end of the glass fibre 4, for example by means of gluing and preferably also by means of clamping.

On the opposite end of the space 8, the second glass fibre 4 is fixed in an analogous manner in a second metal bush 14 which is fixed in the lid 10, for example screwed to it.

The length of the glass fibre 4 between the bushes 13 and 14 is such that this glass fibre 4 is prestressed and thus slightly elongated.

The glass fibre 4 stretches through the bush 14 outside the housing 1 and is connected to a broadband light source 18, for example an Er-doped fibre source with a frequency width of 40 nm, and to a spectral examination unit 19, for example an optical spectrum analyser, a Fabry-Pérot cavity tuner, an optical discriminator or such, by means of a photo coupling 15 and two optical fibres 16 and 17 respectively.

The examination unit 19 is connected to a computer 23 onto which is coupled a screen 24 by means of an optical fibre 20 via an amplifier 21 and an interface 22.

To the coupling 15 is also connected an optical fibre 25 in which are provided one or several reference Bragg gratings.

The above-described pressure measuring device and the optical pressure sensor work as follows.

The pressure chamber 2 is connected to the space in which the pressure to be measured prevails by means of a tube or such, so that this pressure also prevails in the pressure chamber 2.

Since the space 8 is at atmospheric pressure, the membrane 3 onto which the pressure in the pressure chamber 2 acts via the opening 6, will be deformed and will be pressed inside the space 8, whereby this deformation increases as the pressure increases.

As a result of the deformation of the membrane 3, the length of the part of the glass fibre 4 which is situated between the bushes 13 and 14, i.e. the stretched part, will decrease, so that the Bragg grating 5 is modified.

Consequently, the wave length of the light which is sent through the light source to the Bragg grating 5 via the optical fibre 16 and which is reflected by this Bragg grating 5 to the spectral examination unit 19 via the optical fibre 17, will have another wave length pattern.

This wave length or spectrum pattern modification is then detected by the spectral examination unit 19 which can derive the pressure on the basis thereof, and which sends its findings to the computer 23 via the amplifier 21 and the interface 22, which can represent the result on the screen 24.

At every measurement, the measuring device can be calibrated by detecting the spectrum pattern of the light which is reflected by the reference Bragg grating in the optical fibre 25 by means of the spectral examination unit 19.

The embodiment represented in figure 2 differs from the above-described embodiment in that the membrane 3, which in this case forms the entire pressure chamber 2, has another design, but in particular in that the housing 1 has an extension 26 through which the optical glass fibre 4 extends loosely and thus without tension, and in which is provided a second Bragg grating 27 for the temperature measurement, made according to another pattern and which thus reflects another frequency of the light.

The lid of the housing 1 in this case cannot be removed and may possibly be replaced by one or several arms. Such a lid 28 is provided on the end of the extension 26, however, removed from the housing 1. The glass fibre 4 extends loosely through a bush 29 which protrudes through the middle of said lid 28.

The membrane 3 forms an end wall of the housing 1 which is screwed in the jacket 9 and simultaneously forms the walls of the pressure chamber 2.

The membrane 3 contains the opening 6 in which, as the membrane 3 is somewhat elastic, a pipe can be clamped free from leakage.

On the inside of the space 8, the membrane 3 has a central protrusion 24 onto which the bush 13 can be fixed by means of a nut 31 which is screwed on said protrusion 30.

The working is as described above, with this difference that the spectral examination unit 19 can also measure the temperature thanks to the second Bragg grating 27, and thus the deviation created during the pressure measurement due to influences of temperature on the first Bragg grating 5 can be compensated.

For, the glass fibre 4 varies slightly in length as a function of the temperature, which means that also the wave lengths of the reflected light and thus the measurement are influenced by the temperature.

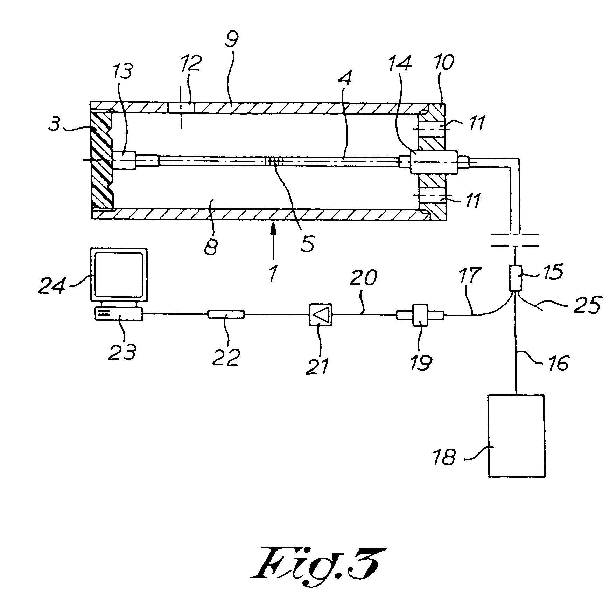

The embodiment represented in figure 3 differs from the embodiment in figure 1 in that the space 8 itself is the pressure chamber, so that the pressure chamber 2, including the wall 7 are omitted, whereas the entry 12 is provided in the jacket 9 and thus opens directly in the space 8, while the lid 10 is closed.

Thus, the space 8 is a closed space.

The working is analogous to the working of the embodiment according to figure 1, with this difference that in case of an increase of pressure, the membrane 3 will bend outwards and the glass fibre 4 will thus increase in length.

Hence, the glass fibre 4 must not be prestressed when there is no overpressure in the space 8.

The above-described pressure sensors and measuring devices are simple and relatively inexpensive to build, and nevertheless allow for a fast and accurate pressure measurement, possibly with temperature compensation.

Since not only the wave length pattern of the reflection, but also that of the transmission changes as a result of a modification of a Bragg grating, the spectral examination unit 19 can subject the transmitted light to a spectral examination instead of the reflected light. In this case, the light source 18 and the spectral examination unit 19 are erected on either side of the Bragg grating 5 and/or 21 in the measuring device, and the above-described pressure sensor is situated for example between the light source 18 and the spectral examination unit 19.

The invention is by no means limited to the above-described embodiments represented in the accompanying drawings; on the contrary, such optical pressure sensors and pressure measuring devices can be made in all sorts of variants while still remaining within the scope of the invention as defined in the following claims.

## Claims

1. Optical pressure sensor with a chamber containing a housing (1) and a membrane (3) provided therein, characterised in that it contains an optical fibre with what is called a `Bragg grating' (5), i.e. a fibre part in whose core are formed reflecting surfaces, which optical fibre (4) is fixed in such a manner between the membrane (3) and the housing (1) that its length will change as the membrane (3) is deformed.

2. Optical pressure sensor according to claim 1, characterised in that the optical fibre (4) with a Bragg grating (5) extends past its attachment to the housing (1), outside this housing (1).

3. Optical pressure sensor according to claim 1 or 2, characterised in that the optical fibre (4) is connected to a light source (18) and to a spectral examination unit (19).

4. Optical pressure sensor according to any of the preceding claims, characterised in that the housing (1) is connected to a pressure chamber (2) which opens into the membrane (3) on the outside of the housing (1), and in that the optical fibre (4) with the Bragg grating (5) in the housing (1), at an equal pressure in the pressure chamber (2) and in the housing (1), is prestressed.

5. Optical pressure sensor according to any of claims 1 to 3, characterised in that the housing (1) is closed pressure-tight and forms a pressure chamber (2).

6. Optical pressure sensor according to any of the preceding claims, characterised in that the optical fibre (4) is fixed to the membrane (3) and to the housing (1) by means of bushes (13 and 14) in which the fibre (4) is glued.

7. Optical pressure sensor according to any of the preceding claims, characterised in that the optical fibre (4) with the Bragg grating (5) contains a second Bragg grating (27) with another spectral reflection pattern for measuring the temperature, or in that it is coupled in series to a second optical fibre with a Bragg grating having another spectral reflection pattern for measuring the temperature.

8. Optical pressure sensor according to claim 7, characterised in that the second Bragg grating (27) is found in a part of the glass fibre (4) which is loose and thus not under tension.

9. Optical pressure sensor according to claim 8, characterised in that the second Bragg grating (27) is situated outside the housing (1), for example in an open extension (26) thereof.

10. Pressure measuring device provided with a pressure sensor according to any of the preceding claims, which contains, apart from said pressure sensor, a light source (18) and a spectral examination unit (19) which are both connected to the optical fibre (4) of the pressure sensor by means of optical fibres (16 and 17).
